## Europäisches Patentamt
## European Patent Office
## Office européen des brevets

(19)

(11) Veröffentlichungsnummer: **0 201 685**
**B1**

(12)

# EUROPÄISCHE PATENTSCHRIFT

(45) Veröffentlichungstag der Patentschrift:
21.09.88

(21) Anmeldenummer: **86103329.8**

(22) Anmeldetag: **12.03.86**

(51) Int. Cl.⁴: **B 23 K 11/24,** B 25 J 19/00,
H 01 F 23/00

(54) **Energieübertragung zwischen den Armen eines Schweissroboters.**

(30) Priorität: **16.03.85 DE 3509631**

(43) Veröffentlichungstag der Anmeldung:
**20.11.86 Patentblatt 86/47**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**DE-A-2 439 025**
**DE-A-3 344 631**
**SU-T-803 029**
**US-A-3 921 114**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Lahmer, Johannes, Hellensteinstrasse 22, D-8000 München 60 (DE)**

(74) Vertreter: **Bücken, Helmut, Bayerische Motoren Werke Aktiengesellschaft Postfach 40 02 40 Petuelring 130 - AJ- 30, D-8000 München 40 (DE)**

## Beschreibung

Die Erfindung bezieht sich auf ein Verfahren zum übertragen von Schweißenergie der im Oberbegriff des ersten Anspruchs angegebenen Art, sowie auf ein Schweißroboter zur Durchführung des Verfahrens.

Bei Schweißrobotern ist üblicherweise die letzte Achse diejenige Achse, die die meisten Drehbewegungen durchführt. Aus diesem Grunde vermeidet man es, den Schweißstrom zwischen der vorletzten und der letzten Achse mittels Kabel zu übertragen. Dieses Kabel hat den Nachteil, daß es aufgrund der Vielzahl von Bewegungsabläufen sich verdrillt und zu brechen beginnt.

Die DE-C2-3 105 105 beschreibt zu diesem Zweck einen Drehanschluß, welcher aus Schleifringen besteht. Die Schleifringe werden durch ein Druckmittel gegeneinander gedrückt, so daß eine sichere Stromübertragung gewährleistet ist.

Einen anderen Weg beschreibt die DE-A1-2 659 743. Dort ist der Schweißtransformator als Hochfrequenztransformator ausgebildet und am letzten Arm eines Schweißroboters befestigt. Das Energieversorgungskabel wird hierbei über eine separate Führung von oben dem Transformator zugegeleitet. An dem Transformator selbst sind die Elektroden in bekannter Weise befestigt. Der Hochfrequenztransformator hat den Vorteil, daß er leichter baut, so daß die Belastung der Lager der einzelnen Arme sich in Grenzen hält.

Aufgabe der vorliegenden Erfindung ist es, eine Möglichkeit aufzuzeigen, wie der Schweißstrom verschleißfrei bei Schweißrobotern übertragen- werden kann.

Diese Aufgabe wird erfindungsgemäß durch die kennzeichnenden Merkmale des ersten Anspruchs gelöst. Diese Lösung hat den Vorteil, daß aufgrund der induktiven übertragung keine sich berührenden Teile, wie bei Schleifringen, vorhanden sind, so daß ein Verschleiß oder eine Korrosion nicht gegeben ist. Damit wird in Abhängigkeit der Größe des Luftspaltes der Schweißstrom während der gesamten Einsatzdauer des Schweißroboters in gleichbleibender Qualität übertragen.

Ein nach dem erfindungsgemäßen Verfahren arbeitender Schweißroboter ist durch die Merkmale des Anspruchs 2 gekennzeichnet.

Zur induktiven Übertragung wird im einfachsten Fall ein Transformator vorgesehen. Der Transformator ist hierbei derart geteilt, daß eine Hälfte an dem Gehäuse eines Armes befestigt ist und die übrige Hälfte mit dem des folgenden Armes verbunden ist. Dadurch dreht sich die eine Hälfte des Transformators um die Drehachse des vorletzten Armes und die andere Hälfte um die Drehachse des letzten Armes. Diese Aufteilung hat den Vorteil, daß sie baulich einfach herzustellen ist. Eine derart aufgebauten Transformator beschreibt die US-A-3 921 114.

Eine vorteilhafte Weiterbildung (Anspruch 3) vereinigt den zur induktiven Übertragung vorgesehenen Transformator mit dem ebenfalls notwendigen Schweißtransformator. Neben der baulichen Vereinfachung des Schweißroboters hat diese Lösung noch den Vorteil, daß das Primärkabel des Schweißtransformators direkt mit der vorletzten Achse verbunden wird. Das Primärkabel ist üblicherweise in Querschnitt dünner und verträgt deshalb die schon wesentlichen geringeren Bewegungen der vorletzten Achse des Schweißroboters wesentlich besser.

Die Weiterbildung nach Anspruch 4 beschreibt eine vorteilhafte Teilungsmöglichkeit des Schweißtransformators.

Da üblicherweise die Arme rotationssymmetrisch aufgebaut sind, ist die Weiterbildung nach Anspruch 5 vorteilhaft. Hierdurch wird der Armdurchmesser nur unwesentlich vergrößert, so daß der Schweißroboter auch durch enge Durchlässe an die Schweißstellen gelangen kann.

Durch die Weiterbildung nach Anspruch 6 wird zur induktiven Übertragung der Schweißenergie vorgesehene Fläche vergrößert und die durch den Luftspalt bedingten Verluste verringert.

Der Anspruch 7 beschreiben günstige Aufbauten für die Kernringe und die Kerndeckel.

Um eine leichte Auswechselbarkeit der Schweißzangen zu erreichen ist die Weiterbildung nach Anspruch 8 sinnvoll.

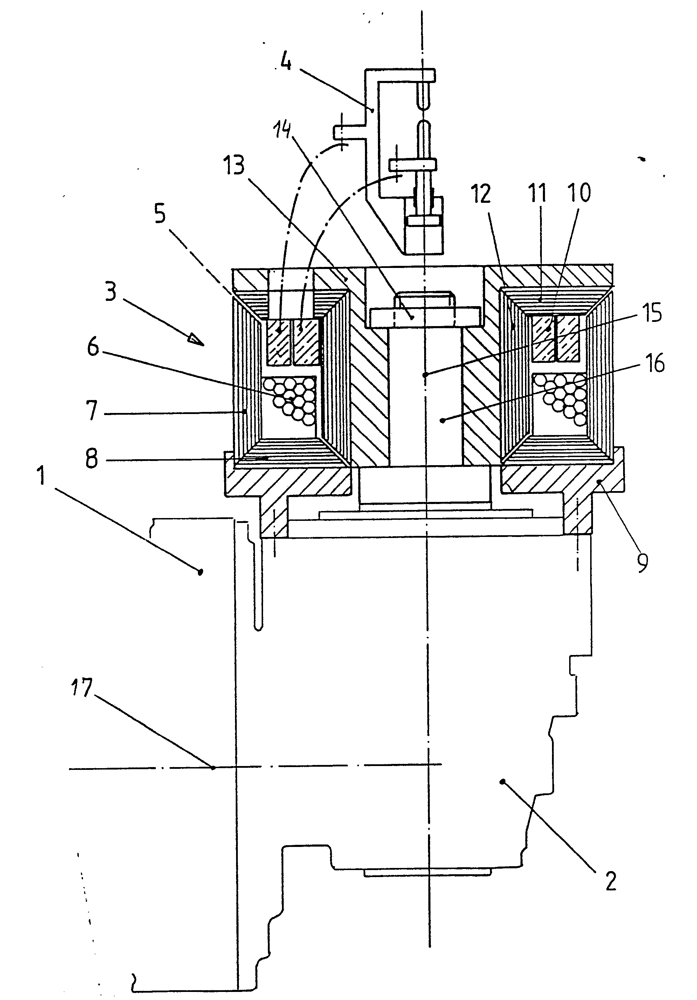

Im folgenden wird die Erfindung anhand eines bevorzugten Ausführungsbeispiels näher erläutert. In der einzigen Abbildung ist ein schematischer Querschnitt durch einen Teil eines Schweißroboter dargestellt. Da sich die Erfindung nur mit der Anordnung der Übertragung des Schweißstromes beschäftigt, ist als Beispiel der vorletzte Arm 1 und der letzte Arm 2 des Schweißroboters schematisch dargestellt.

An dem Arm 2 ist der Drehtransformator 3 zur induktiven Übertragung des Schweißstromes befestigt, der gleichzeitig als Schweißtransformator ausgebildet ist. Er steht in direkter Verbindung mit einem nur schematisch angedeuteten Elektrodenhalter 4 bzw. mit einer Schweißzange. Der Drehtransformator 3 ist als Ringtransformator ausgeführt, dessen Zentrum in der Drehachse 15 des letzten Armes 2 liegt. Da der Ringtransformator bevorzugt einen rechteckigen Querschnitt aufweist, liegt die erfindungsgemäß vorhandene Teilungsebene 5 in einer Diagonale. Die Primärwicklung 6 des Ringtransformators ist drehfest verbunden mit dem Kernring 7 sowie dem Kerndeckel 8. Gehalten wird dieser Teil des Ringtransformators von einem Flansch 9, der mit dem Gehäuse des Armes 2 fest verbunden ist und somit um die Drehachse (17) des Armes 1 drehbar ist.

Die Sekundärwicklung 10 des Ringtransformators ist befestigt an dem Kerndeckel 11 sowie dem Kernring 12. Gehalten werden diese Teile des Ringtransformators von einer Hülse 13. Diese ist um die Drehachse 15 des Armes 2 drehbar angeordnet, indem sie auf dem Wellenabsatz 16 befestigt ist. Die Hülse 13, der Elektrodenhalter 4, der Kernring 12, der Kerndeckel 11 sowie die Sekundärspule 10 bilden baulich eine Einheit, die bei einem Schweißzangenwechsel gemeinsam von dem Wellenstummel entfernt werden, indem die zentrale Befestigungsmutter 14 gelöst wird.

## Patentansprüche

1. Verfahren zum übertragen von Schweißenergie von einem Arm (1) auf einen nachfolgenden Arm (2) eines Schweißroboters, wobei die Arme (1, 2) um ihre Längsachsen (17, 15) drehbar gelagert sind, dadurch gekennzeichnet, daß die Schweißenergie von einem Arm zum anderen induktiv übertragen wird.

2. Schweißroboter zur Herstellung von Widerstandspunktschweißungen, bestehen im wesentlichen aus mehreren hintereinander angeordneten, um ihre Längsachse drehbar gelagerten Arme (1, 2), wobei an dem vorderen Arm (2) eine Elektrode/Schweißzange befestigt ist und der Schweißstrom von einem Arm zum anderen über innerhalb der Arme angeordnete Übertragungselemente übertragen wird, dadurch gekennzeichnet, daß als Übertragungselement ein in zwischen Primärwichlung (6) und Sekundärwichlung (10) geteilten Ringtransformator vorgesehen ist, dessen eine Hälfte um die Drehachse (17) des einen Armes (1) und dessen andere Hälfte um die Drehachse (15) des daran befestigten Armes (2) drehbar angeordnet ist.

3. Schweißroboter nach Anspruch 2, dadurch gekennzeichnet, daß der Transformator (3) zwischen dem vorletzten und letzten Arm des Schweißroboters vorgesehen ist und als Schweißtransformator aufgebaut ist.

4. Schweißroboter nach Anspruch 2 oder 3 mit einem im Querschnitt rechteckigen Transformator, dadurch gekennzeichnet, daß die Teilungsebene (5) in einer Diagonalen liegt.

5. Schweißroboter nach einem der Ansprüche 2 bis 4, dadurch gekennzeichnet, daß die Primärwicklung ( 6 ) mit einem Kernring (7) und einem Kerndeckel (8) auf dem vorletzten Arm (1) befestigt ist.

6. Schweißroboter nach einem der vorangegangenen Ansprüche, dadurch gekennzeichnet, daß die Kernringe (7, 12) aus Trafoblech gewickelt sind und mit kegelförmigen Stirnflächen versehen sind.

7. Schweißroboter nach einem der vorangegangenen Ansprüche, dadurch gekennzeichnet, daß die Kerndeckel (8, 11) aus geschichteten Trafoblechen bestehen.

8. Schweißroboter nach einem der vorangegangenen Ansprüche, dadurch gekennzeichnet, daß die Sekundärwicklung (10) mit dem entsprechenden Kernring (12) und Kerndeckel (11) mit den Schweißzangen (4) einstückig ausgebildet sind und auswechselbar an dem letzten Arm (2) des Schweißroboters befestigt ist.

## Claims

1. A method of transmitting welding energy from one arm (1) to a subsequent arm (2) of a welding robot, wherein the arms (1, 2) are mounted for rotation about their longitudinal axes (17, 15), characterised in that the welding energy is transmitted inductively from one arm to the other.

2. A welding robot for the production of resistance spot welds, composed essentially of a plurality of arms (1, 2) arranged one behind the other and mounted for rotation about their longitudinal axes, wherein an electrode/welding tongs is secured on the forward arm (2) and the welding current is transmitted from one arm to the other by way of transmission elements arranged within the arms, characterised in that a ring-type transformer divided between a primary winding (6) and a secondary winding (10) is provided as a transmission element, of which one half is arranged for rotation about the rotational axis (17) of the one arm (1) and the other half is arranged for rotation about the rotational axis (15) of the arm (2) secured thereto.

3. A welding robot according to Claim 2, characterised in that the transformer (3) is provided between the penultimate and final arms of the welding robot and is assembled as a welding transformer.

4. A welding robot according to Claim 2 or 3 having a transformer of rectangular cross-section, characterised in that the plane (5) of separation lies on a diagonal.

5. A welding robot according to any one of Claims 2 to 4, characterised in that the primary winding (6) is secured with a core ring (7) and a core lid (8) on the penultimate arm (1).

6. A welding robot according to any one of the preceding Claims, characterised in that the core rings (7, 12) are wound from a stamping core plate and are provided with conical end faces.

7. A welding robot according to any one of the preceding Claims, characterised in that the core lids (8, 11) consist of laminated stamping core plates.

8. A welding robot according to any one of the preceding Claims, characterised in that the secondary winding (10) with the corresponding core ring (12) and core lid (11) is made in one piece with the welding tongs (4) and is exchangeably secured on the final arm (2) of the welding robot.

**Revendications**

1. Procédé pour transmettre de l'énergie de soudage à partir d'un bras (1) à un bras suivant (2) d'un robot de soudage, les bras (1, 2) étant montés de façon à pouvoir pivoter autour de leurs axes longitudinaux (17, 15), procédé caractérisé en ce que l'énergie de soudage est transmise d'un bras à l'autre par induction.

2. Robot de soudage pour réaliser des soudures ponctuelles par résistance, robot constitué essentiellement par plusieurs bras (1, 2) disposés l'un derrière l'autre, montés de façon à pouvoir tourner autour de leur axe longitudinal, auquel cas, sur le bras antérieur (2) est fixée une pince de soudage/électrode, et le courant de soudage est transmis d'un bras à l'autre par l'intermédiaire d'éléments de transmission disposés à l'intérieur du bras, robot caractérisé en ce que, comme élément de transmission, il est prévu un transformateur annulaire divisé entre l'enroulement primaire (6) et l'enroulement secondaire (10) dont une moitié est disposée de façon à pouvoir tourner autour de l'axe de rotation (17) du premier bras (1), et dont l'autre moitié est disposée de façon à pouvoir tourner autour du bras (2) fixé sur ce premier bras.

3. Robot de soudage selon la revendication 2, caractérisé en ce que le transformateur (3) est prévu entre l'avant-dernier et le dernier bras du robot de soudage et constitue le transformateur de soudage.

4. Robot de soudage selon la revendication 2 ou 3, avec un transformateur de section transversale rectangulaire, robot caractérisé en ce que le plan de division (5) se situe sur une diagonale.

5. Robot de soudage selon une des revendications 2 à 4, caractérisé en ce que l'enroulement primaire (6) est fixé avec un anneau (7) du noyau et un couvercle (8) du noyau, sur l'avant-dernier bras (1).

6. Robot de soudage selon une des précédentes revendications, caractérisé en ce que les anneaux (7, 12) du noyau sont bobinés à partir de tôles de transformateur et sont munis de surfaces frontales coniques.

7. Robot de soudage selon une des précédentes revendications, caractérisé en ce que les couvercles (8, 11) du noyau sont constitués de tôles de transformateurs empilées.

8. Robot de soudage selon une des précédentes revendications, caractérisé en ce que l'enroulement secondaire (10) avec l'anneau correspondant (12) du noyau et le couvercle (11) du noyau est réalisé d'une seule pièce avec les pinces de soudage (4) et est fixé de façon interchangeable sur le dernier bras (2) du robot de soudage.

0 201 685